(19) Europäisches Patentamt
European Patent Office
Office européen des brevets

(11) **EP 4 794 405 A1**

(12) **EUROPEAN PATENT APPLICATION**
published in accordance with Art. 153(4) EPC

(43) Date of publication:
**19.08.2026 Bulletin 2026/34**

(21) Application number: **24876511.7**

(22) Date of filing: **08.10.2024**

(51) International Patent Classification (IPC):
***H04W 52/26*** *(2009.01)*

(52) Cooperative Patent Classification (CPC):
**H04W 52/02; H04W 52/26**

(86) International application number:
**PCT/CN2024/123456**

(87) International publication number:
**WO 2025/077697 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.10.2023 CN 202311319700**

(71) Applicant: **Vivo Mobile Communication Co., Ltd.**
**Dongguan, Guangdong 523863 (CN)**

(72) Inventor: **SUN, Xiaowen**
**Dongguan, Guangdong 523863 (CN)**

(74) Representative: **Shieldmark**
**P.O. Box 90471**
**2509 LL The Hague (NL)**

# (54) METHOD AND APPARATUS FOR ACQUIRING ENERGY CONSUMPTION INFORMATION, AND COMMUNICATION DEVICE

(57) This application discloses an energy consumption information obtaining method and apparatus, and a communication device, and relates to the field of wireless communication. The energy consumption information obtaining method in embodiments of this application includes: obtaining, by a target network element, an energy consumption exposure request sent by a requesting end, where the energy consumption exposure request is used for requesting exposure of energy consumption information of a target object based on a target granularity, and the target granularity includes one of the following: a protocol data unit (Protocol Data Unit, PDU) session or a quality of service (Quality of Service, QoS) flow; and obtaining, by the target network element, the energy consumption information of the target object based on the target granularity, where the target object includes one of the following: a target PDU session or a target QoS flow.

200

S210

A target network element obtains an energy consumption exposure request sent by a requesting end, where the energy consumption exposure request is used for requesting exposure of energy consumption information of a target object based on a target granularity, and the target granularity includes one of the following: a PDU session and a QoS flow

S212

The target network element obtains the energy consumption information of the target object based on the target granularity, where the target object includes one of the following: a target PDU session and a target QoS flow

FIG. 2

EP 4 794 405 A1

## Description

## CROSS-REFERENCE TO RELATED APPLICATIONS

This application claims priority to Chinese Patent Application No. 202311319700.2, filed with the China National Intellectual Property Administration on October 11, 2023 and entitled " METHOD AND APPARATUS FOR ACQUIRING ENERGY CONSUMPTION INFORMATION, AND COMMUNICATION DEVICE", which is incorporated herein by reference in its entirety.

## TECHNICAL FIELD

This application relates to the field of wireless communication technologies, and specifically, to an energy consumption information obtaining method and apparatus, and a communication device.

## BACKGROUND

In the related art, an operations, administration, and maintenance (OA&M) system collects statistics on energy consumption (Energy Consumption) based on a network function (Network Function, NF) entity granularity, a core network (Core Network, CN) granularity, a radio access network (Radio Access Network, RAN) granularity, or a slice (Slice) granularity, and calculates a related key performance indicator (Key Performance Indicator, KPI), but is unable to obtain energy consumption information on demand.

## SUMMARY

Embodiments of this application provide an energy consumption information obtaining method and apparatus, and a communication device, to resolve a problem of being unable to obtain energy consumption information on demand.

According to a first aspect, an energy consumption information obtaining method is provided, including: obtaining, by a target network element, an energy consumption exposure request sent by a requesting end, where the energy consumption exposure request is used for requesting exposure of energy consumption information of a target object based on a target granularity, and the target granularity includes one of the following: a protocol data unit (Protocol Data Unit, PDU) session or a quality of service (Quality of Service, QoS) flow; and obtaining, by the target network element, the energy consumption information of the target object based on the target granularity, where the target object includes one of the following: a target PDU session or a target QoS flow.

According to a second aspect, an energy consumption information obtaining method is provided, including: sending, by a requesting end, an energy consumption exposure request to a target network element, where the energy consumption exposure request is used for requesting exposure of energy consumption information of a target object based on a target granularity, and the target granularity includes one of the following: a PDU session or a QoS flow; and obtaining, by the requesting end, the energy consumption information of the target object that is sent by the target network element, where the target object includes one of the following: a target PDU session or a target QoS flow.

According to a third aspect, a data volume reporting method is provided, including: receiving, by an SMF, a second request message sent by a target network element, where the second request message is used for instructing the SMF to notify a UPF to which a target object belongs to report a data volume of the target object to the target network element based on a target granularity, and the target granularity includes one of the following: a PDU session or a QoS flow; and determining, by the SMF, the UPF to which the target object belongs; and sending, by the SMF, a third request message to the UPF, where the third request message is used for notifying the UPF to report the data volume of the target object to the target network element based on the target granularity.

According to a fourth aspect, an energy consumption information obtaining apparatus is provided, including: a first obtaining module, configured to obtain an energy consumption exposure request sent by a requesting end, where the energy consumption exposure request is used for requesting exposure of energy consumption information of a target object based on a target granularity, and the target granularity includes one of the following: a PDU session or a QoS flow; and a second obtaining module, configured to obtain the energy consumption information of the target object based on the target granularity, where the target object includes one of the following: a target PDU session or a target QoS flow.

According to a fifth aspect, an energy consumption information obtaining apparatus is provided, including: a first transceiver module, configured to send an energy consumption exposure request to a target network element, where the energy consumption exposure request is used for requesting exposure of energy consumption information of a target object based on a target granularity, and the target granularity includes one of the following: a PDU session or a QoS flow; and a third obtaining module, configured to obtain the energy consumption information of the target object that is sent by the target network element, where the target object includes one of the following: a target PDU session or a target QoS flow.

According to a sixth aspect, a data volume reporting apparatus is provided, including: a second transceiver module, configured to receive a second request message sent by a target network element, where the second request message is used for instructing an SMF to notify a UPF to which a target object belongs to report a data volume of the target object to the target network element based on a target granularity, and the target granularity includes one of the following: a PDU session or a QoS flow; and a determining module, configured to determine the UPF to which the target object belongs; the second transceiver module being further configured to send a third request message to the UPF, where the third request message is used for notifying the UPF to report the data volume of the target object to the target network element based on the target granularity.

According to a seventh aspect, a communication device is provided. The communication device includes a processor and a memory. The memory stores a program or instructions executable on the processor, and the program or the instructions, when executed by the processor, implement the steps of the method according to the first aspect, the steps of the method according to the second aspect, or the steps of the method according to the third aspect.

According to an eighth aspect, a communication device is provided, including a processor and a communication interface. The processor is configured to implement the steps of the method according to the first aspect, the steps of the method according to the second aspect, or the steps of the method according to the third aspect. The communication interface is coupled to the processor.

According to a ninth aspect, a readable storage medium is provided. The readable storage medium stores a program or instructions. The program or the instructions, when executed by a processor, implement the steps of the method according to the first aspect, the steps of the method according to the second aspect, or the steps of the method according to the third aspect.

According to a tenth aspect, a wireless communication system is provided, including: a first communication device, a second communication device, and a third communication device. The first communication device is configured to implement the steps of the method according to the first aspect, the second communication device is configured to implement the steps of the method according to the second aspect, and the third communication device is configured to implement the steps of the method according to the second aspect.

According to an eleventh aspect, a chip is provided. The chip includes a processor and a communication interface. The communication interface is coupled to the processor. The processor is configured to execute a program or instructions, to implement the steps of the method according to the first aspect, the steps of the method according to the second aspect, or the steps of the method according to the third aspect.

According to a twelfth aspect, a computer program/program product is provided. The computer program/program product is stored in a storage medium. The computer program/program product is executed by at least one processor to implement the steps of the method according to the first aspect, the steps of the method according to the second aspect, or the steps of the method according to the third aspect.

In the embodiments of this application, after obtaining the energy consumption exposure request sent by the requesting end, the target network element obtains energy consumption information of a target PDU session or a target QoS flow based on a target granularity requested by the energy consumption exposure request, to obtain the energy consumption information of the target object on demand, thereby achieving network energy saving.

## BRIEF DESCRIPTION OF THE DRAWINGS

FIG. 1 is a block diagram of a wireless communication system applicable to an embodiment of this application;

FIG. 2 is a schematic flowchart of an energy consumption information obtaining method according to an embodiment of this application;

FIG. 3 is a schematic flowchart of another energy consumption information obtaining method according to an embodiment of this application;

FIG. 4 is a schematic flowchart of a data volume reporting method according to an embodiment of this application;

FIG. 5 is a schematic flowchart of another energy consumption information obtaining method according to an embodiment of this application;

FIG. 6 is a schematic flowchart of still another energy consumption information obtaining method according to an embodiment of this application;

FIG. 7 is a schematic structural diagram of an energy consumption information obtaining apparatus according to an embodiment of this application;

FIG. 8 is a schematic structural diagram of another energy consumption information obtaining apparatus according to an embodiment of this application;

FIG. 9 is a schematic structural diagram of a data volume reporting apparatus according to an embodiment of this application;

FIG. 10 is a schematic structural diagram of a communication device according to an embodiment of this application; and

FIG. 11 is a schematic diagram of a hardware structure of a network side device according to an embodiment of this application.

## DETAILED DESCRIPTION

Technical solutions in embodiments of this application are clearly described below with reference to the accompanying drawings in the embodiments of this application. Apparently, the described embodiments are merely some rather than all embodiments of this application. All other embodiments derived by a person of ordinary skill in the art based on the embodiments of this application shall fall within the protection scope of this application.

In this application, the terms "first", "second", and the like are used to distinguish similar objects, but are not used to describe a specific order or sequence. It should be understood that the terms used in this way are exchangeable in a proper case, so that the embodiments of this application herein can be implemented in an order different from the order shown or described herein. In addition, objects distinguished by "first" and "second" are generally of a same type, and a quantity of the objects is not limited. For example, a first object may be one object, or may be a plurality of objects. In addition, "or" in this application indicates at least one of connected objects. For example, "A or B" covers three solutions, that is, solution 1: including A and excluding B; solution 2: including B and excluding A; or solution 3: including both A and B. The character "/" generally indicates an "or" relationship between a preceding associated object and a succeeding associated object.

The term "indication" in this application may be a direct indication (or an explicit indication), or may be an indirect indication (or an implicit indication). The direct indication may be understood as that a sending party explicitly notifies a receiving party of content such as specific information, an operation to be performed, or a request result in a sent indication. The indirect indication may be understood as that the receiving party determines corresponding information based on an indication sent by the sending party, or performs determining and determines an operation to be performed or a request result based on a determining result.

It should be noted that, technologies described in the embodiments of this application are not limited to a long term evolution (Long Term Evolution, LTE)/LTE-advanced (LTE-Advanced, LTE-A) system, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), and other systems. In the embodiments of this application, the terms "system" and "network" are usually used interchangeably, and the technology described can be applied to the systems and radio technologies mentioned above, and can also be applied to other systems and radio technologies. The following descriptions describe a new radio (New Radio, NR) system for exemplary purposes and use the term NR for most of the following descriptions. However, these technologies may also be applied to systems other than the NR system, such as a $6^{th}$ generation ($6^{th}$ Generation, 6G) communication system.

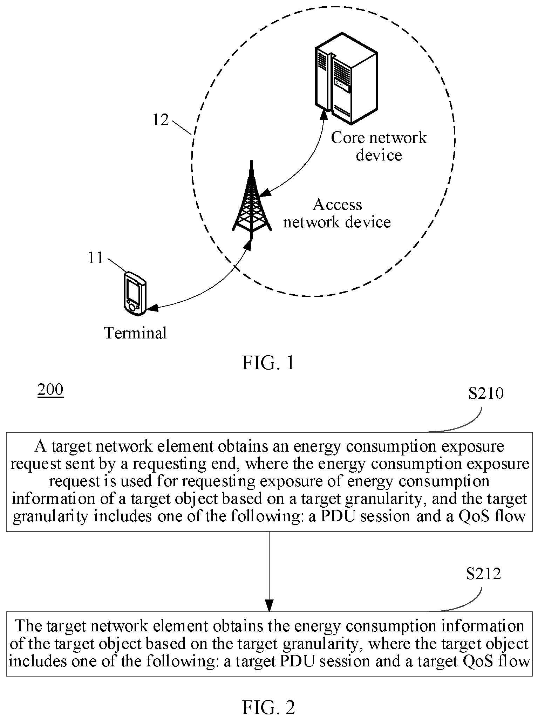

FIG. 1 is a block diagram of a wireless communication system applicable to an embodiment of this application. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), a vehicle user equipment (Vehicle User Equipment, VUE), a shipboard equipment, a pedestrian user equipment (Pedestrian User Equipment, PUE), a smart home appliance (a home device having a wireless communication function, for example, a refrigerator, a television, a washing machine, or furniture), a game console, a personal computer (Personal Computer, PC), a teller machine, or a self-service machine. The wearable device includes a smart watch, a smart band, smart earphones, smart glasses, smart jewelry (a smart bracelet, a smart hand chain, a smart ring, a smart necklace, a smart anklet, a smart foot chain, and the like), a smart wristband, smart clothing, and the like. The vehicle user equipment may also be referred to as an in-vehicle terminal, an in-vehicle controller, an in-vehicle module, an in-vehicle component, an in-vehicle chip, an in-vehicle unit, or the like. It should be noted that, a specific type of the terminal 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (Node B, NB), an Evolved Node B (Evolved Node B, eNB), the next

generation Node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or some other suitable terms in the art. As long as the same technical effect is achieved, the base station is not limited to a specific technical word. It should be noted that, in the embodiments of this application, the base station in the NR system is merely used as an example for description, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that in the embodiments of this application, the core network device in the NR system is merely used as an example for description, and a specific type of the core network device is not limited.

In the related art, measurement of network energy consumption is mainly at an end-to-end network slice level, a core network level, an access network level, or a network function level. An operations, administration, and maintenance (OA&M) system may collect statistics on energy consumption Energy Consumption based on an NF granularity, a CN granularity, a RAN granularity, and a slice granularity, and calculate a related KPI. Generation of all these energy consumption measurements are performed by the operations, administration, and maintenance system, and no information related to energy consumption can be observed at an end-to-end network architecture level. Therefore, when an external third-party application triggers energy consumption measurement at a session level, for example, at a PDU Session granularity or a QoS Flow granularity, a current mobile system does not support measurement and exposure of such energy consumption, and therefore cannot obtain network energy consumption on demand. In view of this problem, an embodiment of this application provides energy consumption information obtaining solution.

The following describes the energy consumption information obtaining solution provided in this embodiment of this application in detail through some embodiments and application scenarios thereof with reference to the accompanying drawings.

FIG. 2 is a schematic flowchart of an energy consumption information obtaining method according to an embodiment of this application. The method 200 may be performed by a communication device. In other words, the method may be performed by software or hardware installed on the communication device. The communication device may be a target network element in a network. As shown in FIG. 2, the method may include the following steps.

S210: The target network element obtains an energy consumption exposure request sent by a requesting end, where the energy consumption exposure request is used for requesting exposure of energy consumption information of a target object based on a target granularity, and the target granularity includes one of the following: a PDU session or a QoS flow.

In this embodiment of this application, the target network element may be an energy efficiency (Energy Efficiency, EE) management network element. For example, the target network element may be a network data analytics function (Network Data Analytics Function, NWDAF) or a newly added energy efficiency network function (Energy Efficiency Network Function, EE NF). Alternatively, the target network element may be an SMF. The SMF stores information about a flow (flow) and a session (session), and the SMF can obtain data usage (Data Usage) information of a UPF.

In an implementation, if the target network element is an independent energy efficiency management network element, for example, the NWDAF or the newly added EE NF, the requesting end may directly send the energy consumption exposure request to the NWDAF or the newly added EE NF.

In another implementation, if the target network element is the SMF, the requesting end may first obtain an identifier of an SMF corresponding to the target object through UDM, and then send the energy consumption exposure request to the SMF.

In this embodiment of this application, the requesting end may be a client of a third-party application, or may be a network system. Specifically, this is not limited in the embodiments of this application.

In an optional implementation, the energy consumption exposure request may carry at least one of the following (1) to (3).

(1) First information used for indicating a statistical target, where the statistical target includes at least one of the following: an energy consumption amount, a carbon emission amount, and a data volume.

The first information may indicate whether the requesting end requests statistics collection on an energy consumption amount, a carbon emission amount, or a data volume of the target object. The target network element may determine, based on the first information, whether the energy consumption information of the target object is the energy consumption amount, the carbon emission amount, or the data volume of the target object.

(2) Second information used for indicating an energy consumption information obtaining manner.

Optionally, the second information may include at least one of the following.

(a) Indication information of an obtaining type, used for indicating an obtaining type of the energy consumption information. The obtaining type includes one of the following: periodic obtaining or one-time obtaining. The indication information of the obtaining type is used for indicating whether the energy consumption information of the target object is obtained periodically or obtained on a one-time basis.

(b) Obtaining period indication information, used for indicating an obtaining period of the energy consumption information. The obtaining period indication information is used for indicating an obtaining period of the energy consumption information. The obtaining period indication information may exist in a case that the indication information of the obtaining type indicates periodic obtaining, or the obtaining period indication information may exist alone. If the obtaining period indication information exists, it indicates that the energy consumption information of the target object is obtained periodically based on the obtaining period indicated by the obtaining period indication information.

(c) Indication information of the target granularity. The indication information of the target granularity is used for indicating an obtaining granularity of the energy consumption information. For example, the obtaining granularity indicated by the indication information of the target granularity may be a PDU session granularity, that is, the energy consumption information per PDU session is obtained. Alternatively, the obtaining granularity indicated by the indication information of the target granularity may be a QoS flow granularity, that is, the energy consumption information per QoS flow is obtained.

(3) Third information used for indicating the target object.

Optionally, the third information includes at least one of the following:

(a) a data network name (Data Network Name, DNN), used for indicating obtaining of energy consumption information of a target object belonging to the DNN;

(b) single network slice selection assistance information (Single Network Slice Selection Assistance Information, S-NSSAI), used for indicating obtaining of energy consumption information of a target object belonging to the S-NSSAI;

(c) an identifier of the target PDU session; and

(d) QoS filtering criteria (QoS filtering Criteria). Optionally, the QoS filtering criteria may include at least one of the following: a traffic descriptor (Traffic Descriptor) (for example, an application program ID) and a QoS parameter (parameter).

It should be noted that, the energy consumption exposure request may include one of (1) to (3), or may include any combination thereof. For example, in a case that the indication information of the target granularity included in the second information indicates the PDU session granularity, the third information may include at least one of the DNN, the S-NSSAI, or the identifier of the target PDU session (PDU Session ID), used for indicating the DNN, the S-NSSAI, and the PDU session corresponding to the target object to be obtained. In a case that the indication information of the target granularity included in the second information indicates the QoS Flow granularity, the third information may include the QoS filtering criteria, used for indicating a target QoS Flow.

In an optional implementation, the third information may further include at least one of the following:

(1) Identification information of a UE, used for indicating obtaining of energy consumption information of a target object corresponding to the UE, where the identification information of the UE includes, but is not limited to, one of the following: a UE ID, a subscription permanent identifier (Subscription Permanent Identifier, SUPI) of the UE, a generic public subscription identifier (Generic Public Subscription Identifier, GPSI) of the UE, an external group identifier (External Group ID) of the UE, or an Internet protocol (Internet Protocol, IP) address (Address) of the UE.

(2) An identifier of an application function (AF ID), used for indicating obtaining of energy consumption information of a target object belonging to the application function.

(3) An identifier of an application program (Application ID), used for indicating obtaining of energy consumption information of a target object corresponding to the application program.

(4) A session identifier of the application function (AF Session ID), used for indicating obtaining of energy consumption information of a target object corresponding to the session identifier of the application function.

S212: The target network element obtains the energy consumption information of the target object based on the target granularity, where the target object includes one of the following: a target PDU session or a target QoS flow.

In S212, the target network element may obtain energy consumption information of at least one target object based on at least one of the first information, the second information, and the third information carried in the energy consumption exposure request. For example, in a case that the energy consumption exposure request carries the first information, and the first information indicates that the statistical target is the energy consumption amount, in S212, the target network element obtains the energy consumption amount of the target object based on the target granularity. For another example, in a case that the energy consumption exposure request carries the second information, and the second information includes the obtaining period indication information and the indication information of the target granularity, in S212, the target network element periodically obtains the energy consumption information of the target object based on the target granularity indicated by the indication information of the target granularity and the obtaining period indicated by the obtaining period indication information. For another example, in a case that the energy consumption exposure request carries the second information and the third information, the second information includes the indication information of the target granularity, the indication information of the target granularity indicates the PDU session granularity, and the DNN included in the third information is a DNN1, in S212, the target network element obtains energy consumption information of each PDU session under the DNN1.

According to the foregoing technical solution provided in this embodiment of this application, after obtaining the energy consumption exposure request sent by the requesting end, the target network element obtains energy consumption information of a target PDU session or a target QoS flow based on a target granularity requested by the energy consumption exposure request, to obtain the energy consumption information of the target object on demand, thereby achieving network energy saving.

In an optional implementation, after S212, the method may further include: sending, by the target network element, the energy consumption information of the target object to the requesting end, where the energy consumption information of the target object includes one of the following: a data volume of the target object, an energy consumption value of the target object, or a carbon emission amount of the target object. Through this optional implementation, the target network element may send, to the requesting end, the energy consumption information of the target object that is obtained based on the target granularity, so that the requesting end can learn the energy consumption information of the target object, thereby avoiding a problem in the related art that no information related to energy consumption can be learned at the end-to-end network architecture level.

In the foregoing implementation, in a case that the energy consumption information of the target object includes the data volume of the target object, the target network element sends the data volume of the target object to the requesting end. The requesting end may obtain the energy consumption value or the carbon emission amount of the target object based on the data volume of the target object. Further, the requesting end may further expose the energy consumption value or the carbon emission amount of the target object.

In an optional implementation, in a case that the energy consumption information of the target object includes the energy consumption value of the target object or the carbon emission amount of the target object, S212 may include the following steps.

Step 1: The target network element obtains the data volume of the target object based on the target granularity.

For example, the target network element may obtain the data volume of the target object through the UPF.

Step 2: The target network element obtains the energy consumption information of the target object based on the data volume of the target object.

According to the foregoing implementation, the target network element may obtain the energy consumption value or the carbon emission amount of the target object based on the target granularity and send the obtained energy consumption value or carbon emission amount of the target object to the requesting end, so that the requesting end can learn the energy consumption value or the carbon emission amount of the target object.

In an optional implementation, that the target network element obtains the energy consumption information of the target object based on the data volume of the target object may include the following steps.

Step 21: Obtain slice energy consumption information and a slice data volume of a slice (Slice) in which the target object is located.

The slice energy consumption information may include an energy consumption amount of the slice or a carbon emission amount of the slice.

Step 22: Obtain the energy consumption information of the target object based on the slice energy consumption information, the slice data volume, and the data volume of the target object.

For example, the target network element may obtain the slice energy consumption information and the slice data volume of the slice in which the target object is located through the operations, administration, and maintenance (OA&M)

system. The slice in which the target object is located may be a slice in which a terminal corresponding to the target object is located. Then, the target network element obtains the energy consumption information of each target object (the PDU session or the QoS flow).

Using the energy consumption amount as an example, the target network element may calculate an energy consumption amount EC (target object) of each target object in the following manner:

$$EC\ (target\ object) = EC\ (Slice) * (datavolume\ (target\ object)/datavolume\ (Slice));$$

EC (Slice) is the slice energy consumption that is of the slice in which the target object is located and that is obtained from the operations, administration, and maintenance (OA&M) system, datavolume (Slice) is the slice data volume that is of the slice in which the target object is located and that is obtained from the operations, administration, and maintenance (OA&M) system, and datavolume (target object) is the data volume of the target object.

In the foregoing optional implementation, in a case that the target network element is the NWDAF, the target network element may directly obtain the slice energy consumption information and the slice data volume through an interface between the NWDAF and the operations, administration, and maintenance (OA&M) system. In a case that the target network element is the newly added EE NF or the SMF, the target network element may obtain, through the NWDAF, the slice energy consumption information and the slice data volume that are collected by the operations, administration, and maintenance (OA&M) system.

In an optional implementation, that the target network element obtains the data volume of the target object based on the target granularity may include the following steps:

Step 11: The target network element determines an SMF corresponding to the target object through UDM.

Optionally, the target network element may send a first request message to the UDM. The first request message is used for requesting the SMF corresponding to the target object. Then, the target network element receives the first response message sent by the UDM. The first response message carries identification information of the SMF corresponding to the target object, for example, an SMF set identifier (SMF Set ID) or an IP address of the SMF, so that the target network element can determine the SMF corresponding to the target object.

In the foregoing implementation, the target network element may be an independent network element, that is, a network element that implements energy efficiency calculation. For example, the target network element may include an energy efficiency network function (EE NF) or a network data analytics function (NWDAF).

The first request message may carry at least one of the following:

(1) a DNN, where the DNN is used for indicating a DNN corresponding to the target object, so that the UDM may determine the SMF corresponding to the target object based on the DNN;
(2) identification information of S-NSSAI, where the identification information of the S-NSSAI is used for indicating the S-NSSAI corresponding to the target object, so that the UDM may determine the SMF corresponding to the target object, based on the S-NSSAI;
(3) an identifier of the target PDU session, where the first request message may directly carry the identifier of the target PDU session in a case that the target object is the target PDU session, so that the UDM may determine the SMF corresponding to the target PDU session based on the identifier of the target PDU session;
(4) QoS filtering criteria, where in a case that the target object is the target QoS flow, the target QoS flow may be indicated by using the QoS filtering criteria, so that the UDM may determine the SMF corresponding to the target QoS flow based on the QoS filtering criteria; and
(5) the identification information of the UE. The identification information of the UE may indicate the UE corresponding to the target object, for example, a UE to which the target PDU session belongs or a UE to which the target QoS belongs, so that the UDM may determine the SMF corresponding to the target object based on the identification information of the UE.

For example, the target network element may send a UDM_UECM_get service request to the UDM, to determine the SMF corresponding to the target object. If the target granularity is the PDU session granularity, the request sent to the UDM includes at least one of the PDU Session ID, the UE ID, an NF type = SMF, the S-NSSAI, and the DNN, and may further include one or more of the identifier of the application function, the identifier of the application program, the session identifier of the application function, the indication information of the obtaining type, the obtaining period indication information, or the like. If the target granularity is the QoS flow granularity, the request sent to the UDM may include at least one of the QoS filtering Criteria, the UE ID, the NF type = SMF, the S-NSSAI, and the DNN, and may further include one or more of the identifier of the application function, the identifier of the application program, the session identifier of the application function, the indication information of the obtaining type, the obtaining period indication information, or the like.

Step 12: The target network element obtains the data volume of the target object through the SMF.

After determining the SMF corresponding to the target object, the target network element may obtain the data volume of the target object through the SMF.

In the foregoing optional implementation, the target network element may obtain the data volume of the target object through the SMF corresponding to the target object, to improve data volume obtaining efficiency.

In an optional implementation, step 12 may include the following steps.

Step 121: The target network element sends a second request message to the SMF, where the second request message is used for instructing the SMF to notify a UPF to which the target object belongs to report the data volume of the target object to the target network element based on the target granularity.

Optionally, the second request message may carry at least one of the following:

(1) an event indication, where the event indication is used for indicating that the target object is the target QoS flow, or the event indication is used for indicating that the target object is the target PDU session; and through the event indication, the SMF can learn whether the data volume is obtained and reported based on the PDU granularity or the QoS flow granularity;
(2) an identifier of the target PDU session, where through the identifier of the target PDU session, the SMF can learn the PDU session of the data volume that needs to be obtained and reported;
(3) an identifier of a target UE, where through the identifier of the target UE, the SMF can learn for which UE a data volume of each PDU session or QoS flow is obtained and reported;
(4) an identifier of an application program, where through the identifier of the application program, the SMF can learn for which application program the data volume of each PDU session or QoS flow is obtained and reported;
(5) S-NSSAI, where through the S-NSSAI, the SMF can learn for which S-NSSAI the data volume of each corresponding PDU session or QoS flow is obtained and reported; and
(6) a DNN, where through the DNN, the SMF can learn for which S-NSSAI the data volume of each corresponding PDU session or QoS flow is obtained and reported.

Step 122: The target network element receives the data volume of the target object that is reported by the UPF.

After receiving the second request message, the SMF may select a UPF to which the target PDU session or the target QoS flow belongs, and send a notification request to the UPF to notify the UPF to collect statistics and report the requested data volume. Optionally, the notification request may carry the obtaining period indication information, the indication information of the obtaining type, and the like. After receiving the notification message, the UPF may collect statistics on the data volume of each target object, and report the data volume of each target object to the target network element. For example, statistics of a data volume per PDU session or per QoS flow are collected through a UserDataUsageMeasure event (event) of a UPF Exposure service.

In the foregoing implementation, if the energy consumption exposure request carries the obtaining period indication information, in step 122, the target network element may periodically receive the data volume of the target object that is reported by the UPF.

In another optional implementation, in a case that the target network element is the SMF, that the target network element obtains the data volume of the target object based on the target granularity may include the following steps.

Step 11': The SMF notifies, based on the energy consumption exposure request, a UPF to which the target object belongs to report the data volume of the target object based on the target granularity.

Optionally, the SMF may send the notification message to the UPF, where the notification message is used for instructing the UPF to collect statistics on the data volume of the target object.

Optionally, the notification message may include at least one of the following:

(1) indication information of a reporting type, where the reporting type includes one of the following: periodic reporting or one-time reporting; and
(2) reporting period indication information.

Step 12': The SMF receives the data volume of the target object that is reported by the UPF.

After receiving the notification message, the UPF may collect statistics on the data volume of each target object and report the data volume of each target object to the SMF. For example, the UPF may collect statistics on the data volume per PDU session or per QoS flow through the UserDataUsageMeasure event (event) of the UPF Exposure service.

According to the foregoing technical solution provided in this embodiment of this application, after obtaining the energy consumption exposure request sent by the requesting end, the target network element obtains energy consumption information of a target PDU session or a target QoS flow based on a target granularity requested by the energy consumption exposure request, to obtain the energy consumption information of the target object on demand, thereby achieving network energy saving.

Based on the same technical concept, an embodiment of this application further provides another energy

consumption information obtaining method.

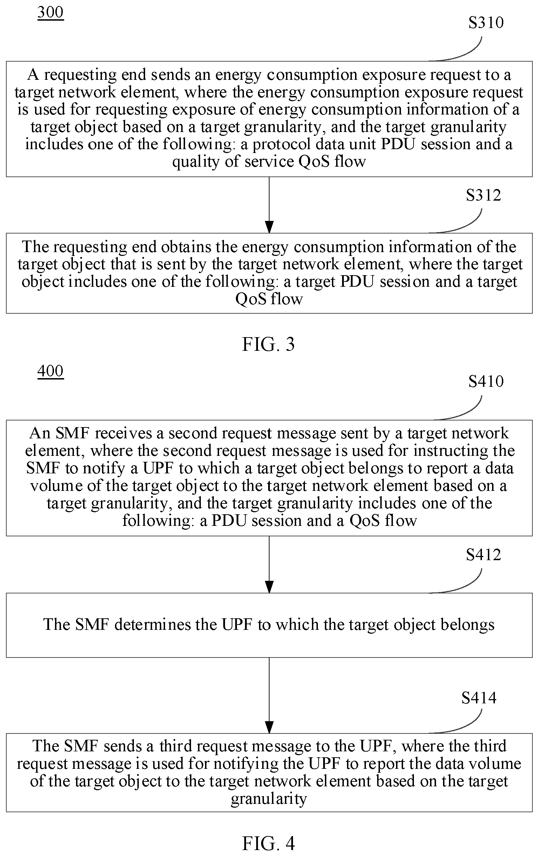

FIG. 3 is a schematic flowchart of another energy consumption information obtaining method according to an embodiment of this application. The method 300 may be performed by a communication device. In other words, the method may be performed by software or hardware installed on the communication device. The communication device may be the foregoing requesting end. As shown in FIG. 3, the method may include the following steps.

S310: The requesting end sends an energy consumption exposure request to a target network element, where the energy consumption exposure request is used for requesting exposure of energy consumption information of a target object based on a target granularity, and the target granularity includes one of the following: a protocol data unit PDU session or a quality of service QoS flow.

In a case that the target network element is the foregoing NWDAF or newly added EE NF, the requesting end may directly send the energy consumption exposure request to the target network element. In a case that the target network element is the SMF, the requesting end may first determine the SMF corresponding to the target object through the UDM, and then send the energy consumption exposure request to the determined SMF. For details, refer to the related descriptions in the foregoing method 200. Details are not described herein again.

S312: The requesting end obtains the energy consumption information of the target object that is sent by the target network element, where the target object includes one of the following: a target PDU session or a target QoS flow.

In specific applications, the target network element may obtain the energy consumption information of the target object and send the energy consumption information of the target object to the requesting end based on the implementations in the foregoing method 200. For details, refer to the related descriptions in the method 200.

In an optional implementation, the energy consumption exposure request may carry at least one of the following: first information used for indicating a statistical target, second information used for indicating an energy consumption information obtaining manner, and third information used for indicating the target object, where the statistical target includes at least one of the following: energy consumption, carbon emission, and a data volume.

Optionally, the second information may include at least one of the following:

indication information of an obtaining type, used for indicating an obtaining type of the energy consumption information, where the obtaining type includes one of the following: periodic obtaining or one-time obtaining;
obtaining period indication information, used for indicating an obtaining period of the energy consumption information; and
indication information of the target granularity.

Optionally, the third information includes at least one of the following:

a DNN, used for indicating obtaining of energy consumption information of a target object belonging to the DNN;
S-NSSAI, used for indicating obtaining of energy consumption information of a target object belonging to the S-NSSAI;
an identifier of the target PDU session; and
QoS filtering criteria.

Optionally, the third information may further include at least one of the following:

identification information of a UE, used for indicating obtaining of energy consumption information of a target object corresponding to the UE;
an identifier of an application function, used for indicating obtaining of energy consumption information of a target object belonging to the application function;
an identifier of an application program, used for indicating obtaining of energy consumption information of a target object corresponding to the application program; and
a session identifier of the application function, used for indicating obtaining of energy consumption information of a target object corresponding to the session identifier.

Optionally, the energy consumption information includes at least one of the following: an energy consumption value, a carbon emission amount, and a data volume.

In an optional implementation, in a case that the energy consumption information includes the data volume, after the requesting end obtains the energy consumption information of the target object that is sent by the target network element, the method further includes: obtaining, by the requesting end, the energy consumption value or the carbon emission amount of the target object based on the data volume of the target object.

For example, in a case that the requesting end already has a data volume and energy consumption information of a slice, the first information that is used for indicating the statistical target and that is carried in the energy consumption

exposure request sent by the requesting end may indicate that the statistical target is the data volume. After obtaining the data volume of the target object, the requesting end may obtain the energy consumption value or the carbon emission amount of the target object based on the existing data volume and energy consumption information of the slice. Therefore, in an optional implementation, the obtaining, by the requesting end, the energy consumption value or the carbon emission amount of the target object based on the data volume of the target object may include the following steps.

Step 1: The requesting end obtains slice energy consumption information and a slice data volume of a slice in which the target object is located. The slice energy consumption information and the slice data volume of the slice in which the target object is located may be obtained before the requesting end sends the energy consumption exposure request.

Step 2: Obtain the energy consumption value or the carbon emission amount of the target object based on the slice energy consumption information, the slice data volume, and the data volume of the target object.

For a specific implementation of obtaining the energy consumption value or the carbon emission amount of the target object based on the slice energy consumption information, the slice data volume, and the data volume of the target object, refer to the specific implementation of obtaining, by the target network element, the energy consumption value or the carbon emission amount of the target object based on the slice energy consumption information, the slice data volume, and the data volume of the target object. Details are not described herein again.

In an optional implementation, after obtaining the energy consumption value or the carbon emission amount (which may be calculated by the requesting end, or may be sent by the target network element) corresponding to the target object, the requesting end exposes the energy consumption value or the carbon emission amount of the target object, so that the third-party application can obtain the energy consumption value or the carbon emission amount of the target object, thereby achieving network energy saving.

According to the foregoing technical solution provided in this embodiment of this application, the requesting end may obtain, by sending the energy consumption exposure request to the target network element, energy consumption information of each target object per target granularity, to obtain the energy consumption information on demand, thereby achieving network energy saving.

Based on the same technical concept, an embodiment of this application further provides a data volume reporting method.

FIG. 4 is a schematic flowchart of a data volume reporting method according to an embodiment of this application. The method 400 may be performed by a communication device. In other words, the method may be performed by software or hardware installed on the communication device. The communication device may be an SMF, and the SMF may be an SMF in an implementation in which the target network element is the NWDAF or the newly added EE NF in the foregoing method 200. As shown in FIG. 4, the method may include the following steps.

S410: The SMF receives a second request message sent by a target network element, where the second request message is used for instructing the SMF to notify a UPF to which a target object belongs to report a data volume of the target object to the target network element based on a target granularity, and the target granularity includes one of the following: a PDU session or a QoS flow.

Optionally, the second request message carries at least one of the following:

(1) an event indication, where the event indication is used for indicating that the target object is a target QoS flow, or the event indication is used for indicating that the target object is a target PDU session;
(2) an identifier of the target PDU session;
(3) an identifier of a target UE;
(4) an identifier of an application program;
(5) S-NSSAI; and
(6) a DNN.

S412: The SMF determines the UPF to which the target object belongs.

The SMF may determine the UPF to which the target object belongs based on one of the foregoing pieces of information carried in the second request message.

S414: The SMF sends a third request message to the UPF, where the third request message is used for notifying the UPF to report the data volume of the target object to the target network element based on the target granularity.

Optionally, the third request message carries at least one of the following:

indication information of a reporting type, where the reporting type includes one of the following: periodic reporting or one-time reporting; and
reporting period indication information.

After receiving the third request message, the UPF may collect statistics on the data volume of each target object, and report the data volume of each target object to the target network element. For example, statistics of a data volume per

PDU session or per QoS flow are collected through a UserDataUsageMeasure event (event) of a UPF Exposure service.

Optionally, the UPF may report the data volume of each target object based on the foregoing information carried in the third request message, for example, periodic reporting and one-time reporting.

In the foregoing technical solution provided in this embodiment of this application, after receiving the second request message sent by the target network element, the SMF may notify the UPF to collect statistics and report the data volume of the target object to the target network element, so that the target network element can obtain the data volume of each target object based on the target granularity, and further determine the energy consumption information of each target object, thereby obtaining the energy consumption information of each target object on demand.

The following describes the technical solution provided in this embodiment of this application through a specific embodiment.

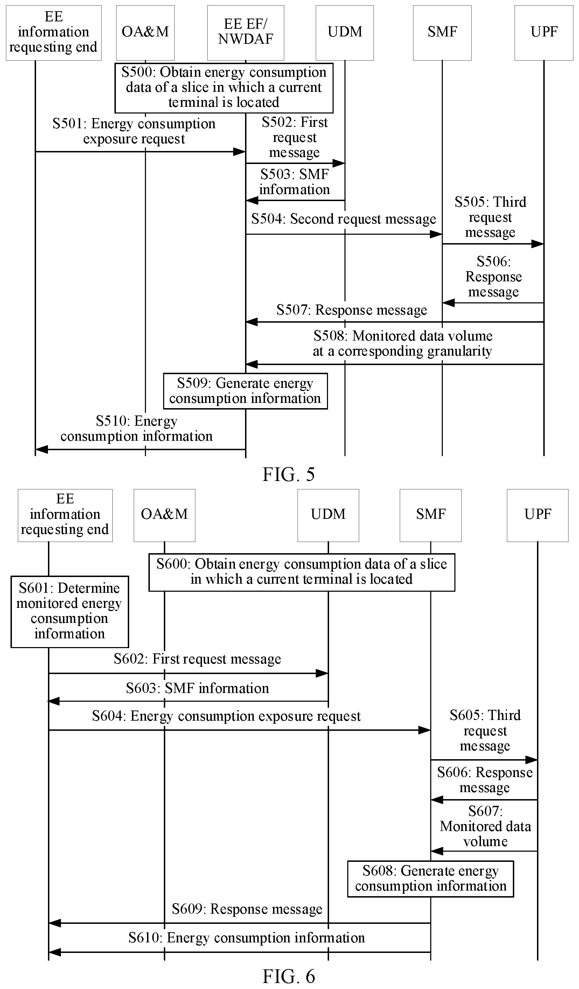

FIG. 5 is a schematic flowchart of another energy consumption information obtaining method according to an embodiment of this application. As shown in FIG. 5, the method mainly includes the following steps:

S501: An EE information requesting end sends an energy consumption exposure request to an EE EF or an NWDAF, where the energy consumption exposure request is used for requesting exposure of energy consumption at a PDU session level (PDU Session Level, that is, a PDU session granularity) or a QoS flow level (QoS Flow level, that is, a QoS flow granularity).

The energy consumption exposure request carries one or more pieces of the following related request information:

a) a reporting type: one of energy consumption (Energy Consumption), carbon emission (Carbon Emission), or a data volume;

b) a reporting period: for example, every 15 minutes;

c) a reporting type: periodic reporting or one-time reporting;

d) a reporting granularity: a PDU session level or a QoS flow level;

if the reporting granularity is the PDU Session granularity, the energy consumption exposure request may further carry a DNN, S-NSSAI, and a PDU Session ID; and

if the reporting granularity is the QoS Flow granularity, the energy consumption exposure request may further carry QoS filtering Criteria;

e) monitored UE information (a UE ID, a SUPI, a GPSI, an External Group ID, and the like);

f) a UE IP Address;

g) an AF ID;

h) an Application ID; and

i) an AF Session ID.

S502: The EE NF or the NWDAF sends a first request message (for example, a UDM_UECM_get service request) to a UDM, to request the UDM to obtain an SMF corresponding to the foregoing UE, DNN, and S-NSSAI.

If a required reporting type is the PDU Session level, the UDM_UECM_get service request sent to the UDM may include at least one of a PDU Session ID, a UE ID, an NF type = SMF, S-NSSAI, and a DNN, and may further carry one or more pieces of other related request information carried in the energy consumption exposure request in S501.

If a required reporting type is the QoS level, the UDM_UECM_get service request sent to the UDM may include at least one of QoS filtering criteria, a UE ID, an NF type = SMF, S-NSSAI, and a DNN, and may further carry one or more pieces of other related request information carried in the energy consumption exposure request in S501.

The QoS filtering Criteria may include one or more of a Traffic Descriptor (for example, an Application ID) or a QoS parameter.

S503: The EE NF/NWDAF obtains returned SMF information, for example, an SMF Set ID or an SMF IP address.

S504: The EE NF/NWDAF sends a second request message (for example, Nsmf_EventExposure_Subscribe_request) to the SMF, to request the SMF to obtain a data volume of a corresponding PDU Session or QoS flow level.

The second request message may carry one or more pieces of the following information:

(1) an event indication (Event): a QoS Flow data volume or a PDU Session data volume;

(2) a PDU session id (if a PDU level is monitored);

(3) a Target UE ID;

(4) an APP ID;

(5) S-NSSAI; or

(6) a DNN.

S505: The SMF selects a UPF to which a current PDU session or QoS belongs, and sends a third request message to the UPF. The third request message is used for notifying the UPF to collect statistics on a requested data volume. The third request message includes, but is not limited to, a reporting period, a reporting type, and the like.
For example, the third request message may be an N4 session modification message, instructing to measure user data usage.
S506: The UPF collects statistics on a data volume per PDU session or per QoS flow through a UserDataUsageMeasure event (event) of a UPF Exposure service, and the UPF may send to the SMF a response message, for example, an Nupf_EventExposure_subsribe message.
S507: The UPF sends to the EE NF/NWDAF a response message (response exposure) of the energy consumption exposure request, for example, an Nsmf_EventExposure_subsribe respons message. This step is an optional step.
S508: The UPF returns a monitored data volume at a corresponding granularity to the EE NF/NWDAF based on a requirement, for example, may return the monitored data at the corresponding granularity through a Nupf_EventExposure_Notify message.
S509: The EE NF/NWDAF generates energy consumption information.
As shown in FIG. 5, the EE NF/NWDAF may obtain energy consumption data of a slice in which a current terminal is located from an operations, administration, and maintenance (OA&M) system in S500. For example, the NWDAF obtains the energy consumption data of the slice in which the current terminal is located through an interface of the operations, administration, and maintenance (OA&M) system.
A method for calculating energy consumption per PDU session and per flow granularity may be:

EC (PDU level or QoS level) = Slice level EC * (PDU or QoS data volume/Slice data volume)

The Slice level EC is the energy consumption data of the slice obtained from the operations, administration, and maintenance (OA&M) system. The NWDAF may be directly obtained through an interface between the NWDAF and the operations, administration, and maintenance (OA&M) system. There may be two obtaining manners for the EE NF. One is directly obtaining through an interface with the operations, administration, and maintenance (OA&M) system, and the other is obtaining, through the NWDAF, energy consumption information collected by the operations, administration, and maintenance (OA&M) system.
S510: The EE NF/NWDAF returns the energy consumption information to the requesting end, and the requesting end may expose an energy consumption value.
In specific applications, in a case that the energy consumption exposure request carries a parameter related to a period, all the foregoing monitoring, collection, and reporting are performed based on the corresponding period.
According to the foregoing technical solution, an independent EE NF or NWDAF may obtain energy consumption information of a single flow or session, thereby satisfying a requirement of the requesting end.
FIG. 6 is a schematic flowchart of still another energy consumption information obtaining method according to an embodiment of this application. The method differs from the method shown in FIG. 5 in that the energy consumption information is obtained by the SMF rather than by the EE NF or the NWDAF. As shown in FIG. 6, the method mainly includes the following steps:

S601: An EE information requesting end determines monitored energy consumption information, and determines at least one of a monitored UE ID, a monitored PDU session ID, monitored S-NSSAI, and monitored QoS filtering criteria.
S602: The requesting end sends a first request message (for example, a UDM_UECM_get service request) to a UDM, to request the UDM to obtain an SMF corresponding to the foregoing UE, DNN, and S-NSSAI.

If a reporting type required by the requesting end is the PDU Session level, the UDM_UECM_get service request sent to the UDM may include at least one of a PDU Session ID, a UE ID, an NF type = SMF, S-NSSAI, and a DNN, and may further carry one or more pieces of other related request information carried in the energy consumption exposure request in S601.
If a required reporting type is the QoS level, the UDM_UECM_get service request sent to the UDM may include at least one of QoS filtering criteria, a UE ID, an NF type = SMF, S-NSSAI, and a DNN, and may further carry one or more pieces of other related request information carried in the energy consumption exposure request in S601.
The QoS filtering Criteria may include one or more of a Traffic Descriptor (for example, an Application ID) or a QoS parameter.
S603: The requesting end obtains returned SMF information, for example, an SMF Set ID or an SMF IP address.
S604: The requesting end sends an energy consumption exposure request to the SMF, where the energy consumption exposure request is used for requesting exposure of energy consumption at a PDU session level (PDU

Session Level, that is, a PDU session granularity) or a QoS flow level (QoS Flow level, that is, a QoS flow granularity).

The energy consumption exposure request carries one or more pieces of the following related request information:

a) a reporting type: one of energy consumption (Energy Consumption), carbon emission (Carbon Emission), or a data volume;
b) a reporting period: for example, every 15 minutes;
c) a reporting type: periodic reporting or one-time reporting;
d) a reporting granularity: a PDU session level or a QoS flow level;

if the reporting granularity is the PDU Session granularity, the energy consumption exposure request may further carry a DNN, S-NSSAI, and a PDU Session ID; and
if the reporting granularity is the QoS Flow granularity, the energy consumption exposure request may further carry QoS filtering Criteria;

e) monitored UE information (a UE ID, a SUPI, a GPSI, an External Group ID, and the like);
f) a UE IP Address;
g) an AF ID;
h) an Application ID; and
i) an AF Session ID.

S605: The SMF selects a UPF to which a current PDU session or QoS belongs, and sends a third request message to the UPF. The third request message is used for notifying the UPF to collect statistics on a requested data volume. The third request message includes, but is not limited to, a reporting period, a reporting type, and the like.

For example, the third request message may be an N4 session modification message, instructing to measure user data usage.

S606: The UPF collects statistics on a data volume per PDU session or per QoS flow through a UserDataUsageMeasure event (event) of a UPF Exposure service, and the UPF may send to the SMF a response message, for example, an Nupf_EventExposure_subsribe message.

S607: The UPF returns a monitored data volume at a corresponding granularity to the SMF, for example, may return the monitored data at corresponding granularity through a Nupf_EventExposure_Notify message.

S608: The SMF generates energy consumption information.

As shown in FIG. 6, the SMF may obtain energy consumption data of a slice in which a current terminal is located from an operations, administration, and maintenance (OA&M) system in S600.

A method for calculating energy consumption per PDU session and per flow granularity may be:

EC (PDU level or QoS level) = Slice level EC * (PDU or QoS data volume/Slice data volume)

The Slice level EC is the energy consumption data of the slice obtained from the operations, administration, and maintenance (OA&M) system. The NWDAF may be directly obtained through an interface between the NWDAF and the operations, administration, and maintenance (OA&M) system. There may be two obtaining manners for the EE NF. One is directly obtaining through an interface with the operations, administration, and maintenance (OA&M) system, and the other is obtaining, through the NWDAF, energy consumption information collected by the operations, administration, and maintenance (OA&M) system.

S609: The SMF sends to the requesting end a response message of the energy consumption exposure request, for example, an Nsmf_EventExposure_subsribe respons message. This step is an optional step.

S610: The SMF returns the energy consumption information to the requesting end, and the requesting end may expose an energy consumption value.

In specific applications, in a case that the energy consumption exposure request carries a parameter related to a period, all the foregoing monitoring, collection, and reporting are performed based on the corresponding period.

It should be noted that, in FIG. 5 and FIG. 6, an example in which energy consumption is calculated by the EE NF, the NWDAF, or the SMF is used for description, but is not limited thereto. In specific applications, the EE NF, the NWDAF, or the SMF may further return the data volume at a PDU session granularity or at a QoS flow granularity to the requesting end, so that the requesting end calculates the energy consumption. For example, the energy consumption exposure request may indicate that a requested statistical target is the data volume (data volume). For example, if the requesting end may already have the data volume and EC information of the Slice, the requesting end may perform the foregoing steps of calculating the energy consumption. In this case, the EE NF, the NWDAF, or the SMF sends the data volume, rather than

the energy consumption value, to the requesting end.

The energy consumption information obtaining method provided in this embodiment of this application may be performed by an energy consumption information obtaining apparatus. In an embodiment of this application, an example in which the energy consumption information obtaining apparatus performs the energy consumption information obtaining method is used to describe the energy consumption information obtaining apparatus provided in this embodiment of this application.

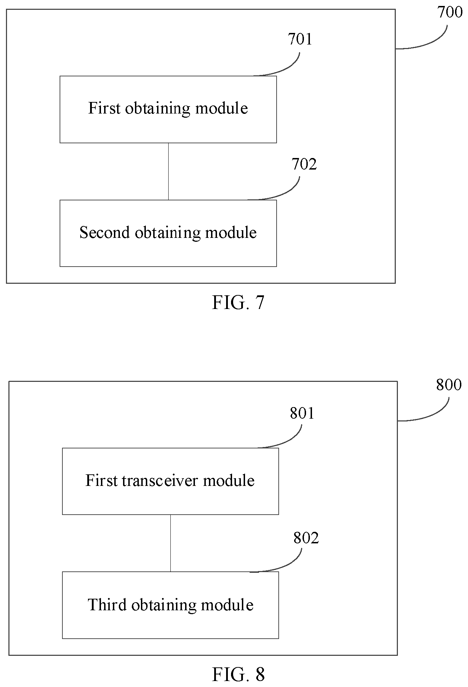

FIG. 7 is a schematic structural diagram of an energy consumption information obtaining apparatus according to an embodiment of this application. As shown in FIG. 7, the apparatus 700 mainly includes: a first obtaining module 701 and a second obtaining module 702.

In this embodiment of this application, the first obtaining module 701 is configured to obtain an energy consumption exposure request sent by a requesting end, where the energy consumption exposure request is used for requesting exposure of energy consumption information of a target object based on a target granularity, and the target granularity includes one of the following: a PDU session or a QoS flow. The second obtaining module 702 is configured to obtain the energy consumption information of the target object based on the target granularity, where the target object includes one of the following: a target PDU session or a target QoS flow.

In an optional implementation, the energy consumption exposure request carries at least one of the following: first information used for indicating a statistical target, second information used for indicating an energy consumption information obtaining manner, and third information used for indicating the target object, where the statistical target includes at least one of the following: an energy consumption amount, a carbon emission amount, and a data volume.

In an optional implementation, the second information includes at least one of the following:

indication information of an obtaining type, used for indicating an obtaining type of the energy consumption information, where the obtaining type includes one of the following: periodic obtaining or one-time obtaining;
obtaining period indication information, used for indicating an obtaining period of the energy consumption information; and
indication information of the target granularity.

In an optional implementation, the third information includes at least one of the following:

a DNN, used for indicating obtaining of energy consumption information of a target object belonging to the DNN;
S-NSSAI, used for indicating obtaining of energy consumption information of a target object belonging to the S-NSSAI;
an identifier of the target PDU session; and
QoS filtering criteria.

In an optional implementation, the third information further includes at least one of the following:

identification information of a UE, used for indicating obtaining of energy consumption information of a target object corresponding to the UE;
an identifier of an application function, used for indicating obtaining of energy consumption information of a target object belonging to the application function;
an identifier of an application program, used for indicating obtaining of energy consumption information of a target object corresponding to the application program; and
a session identifier of the application function, used for indicating obtaining of energy consumption information of a target object corresponding to the session identifier.

In an optional implementation, the apparatus 700 further includes: a sending unit, configured to send the energy consumption information of the target object to the requesting end, where the energy consumption information of the target object includes one of the following: a data volume of the target object, an energy consumption value of the target object, or a carbon emission amount of the target object.

In an optional implementation, in a case that the energy consumption information of the target object includes the energy consumption value of the target object or the carbon emission amount of the target object, the obtaining the energy consumption information of the target object based on the target granularity includes:

obtaining the data volume of the target object based on the target granularity; and
obtaining the energy consumption information of the target object based on the data volume of the target object.

In an optional implementation, the obtaining the energy consumption information of the target object based on the

data volume of the target object includes:

obtaining slice energy consumption information and a slice data volume of a slice in which the target object is located; and
obtaining the energy consumption information of the target object based on the slice energy consumption information, the slice data volume, and the data volume of the target object.

In an optional implementation, the obtaining the data volume of the target object based on the target granularity includes:

determining an SMF corresponding to the target object through UDM; and
obtaining the data volume of the target object through the SMF.

In an optional implementation, the determining an SMF corresponding to the target object through UDM includes:

sending a first request message to the UDM, where the first request message is used for requesting the session management function SMF corresponding to the target object; and
receiving a first response message sent by the UDM, where the first response message carries identification information of the SMF.

In an optional implementation, the first request message carries at least one of the following:

a DNN;
identification information of S-NSSAI;
an identifier of the target PDU session;
QoS filtering criteria; and
identification information of a UE.

In an optional implementation, the obtaining the data volume of the target object through the SMF includes:

sending a second request message to the SMF, where the second request message is used for instructing the SMF to notify a user plane function UPF to which the target object belongs to report the data volume of the target object to the target network element based on the target granularity; and
receiving the data volume of the target object that is reported by the UPF.

In an optional implementation, the second request message carries at least one of the following:

an event indication, where the event indication is used for indicating that the target object is the target QoS flow, or the event indication is used for indicating that the target object is the target PDU session;
an identifier of the target PDU session;
an identifier of a target UE;
an identifier of an application program;
S-NSSAI; and
a DNN.

In an optional implementation, the apparatus is located in an energy efficiency network function (EE NF) or a network data analytics function (NWDAF).

In an optional implementation, the apparatus is located in the SMF; and the obtaining the data volume of the target object based on the target granularity includes:

notifying, based on the energy consumption exposure request, a UPF to which the target object belongs to report the data volume of the target object based on the target granularity; and
receiving the data volume of the target object that is reported by the UPF.

In an optional implementation, the notifying, based on the energy consumption exposure request, a UPF to which the target object belongs to report the data volume of the target object based on the target granularity includes:
sending a notification message to the UPF, where the notification message is used for instructing the UPF to collect statistics on the data volume of the target object.

In an optional implementation, the notification message includes at least one of the following:

indication information of a reporting type, where the reporting type includes one of the following: periodic reporting or one-time reporting; and
reporting period indication information.

The energy consumption information obtaining apparatus provided in this embodiment of this application is capable of implementing the processes implemented in the method embodiment of FIG. 2, and can achieve the same technical effect. To avoid repetition, details are not described herein again.

FIG. 8 is a schematic structural diagram of another energy consumption information obtaining apparatus according to an embodiment of this application. As shown in FIG. 8, the apparatus 800 mainly includes: a first transceiver module 801 and a third obtaining module 802.

In this embodiment of this application, the first transceiver module 801 is configured to send an energy consumption exposure request to a target network element, where the energy consumption exposure request is used for requesting exposure of energy consumption information of a target object based on a target granularity, and the target granularity includes one of the following: a PDU session or a QoS flow. The third obtaining module 802 is configured to obtain the energy consumption information of the target object that is sent by the target network element, where the target object includes one of the following: a target PDU session or a target QoS flow.

In an optional implementation, the energy consumption exposure request carries at least one of the following: first information used for indicating a statistical target, second information used for indicating an energy consumption information obtaining manner, and third information used for indicating the target object, where the statistical target includes at least one of the following: energy consumption, carbon emission, and a data volume.

In an optional implementation, the second information includes at least one of the following:

indication information of an obtaining type, used for indicating an obtaining type of the energy consumption information, where the obtaining type includes one of the following: periodic obtaining or one-time obtaining;
obtaining period indication information, used for indicating an obtaining period of the energy consumption information; and
indication information of the target granularity.

In an optional implementation, the third information includes at least one of the following:

a DNN, used for indicating obtaining of energy consumption information of a target object belonging to the DNN;
S-NSSAI, used for indicating obtaining of energy consumption information of a target object belonging to the S-NSSAI;
an identifier of the target PDU session; and
QoS filtering criteria.

In an optional implementation, the third information further includes at least one of the following:

identification information of a UE, used for indicating obtaining of energy consumption information of a target object corresponding to the UE;
an identifier of an application function, used for indicating obtaining of energy consumption information of a target object belonging to the application function;
an identifier of an application program, used for indicating obtaining of energy consumption information of a target object corresponding to the application program; and
a session identifier of the application function, used for indicating obtaining of energy consumption information of a target object corresponding to the session identifier.

In an optional implementation, the energy consumption information includes at least one of the following: an energy consumption value, a carbon emission amount, and a data volume.

In an optional implementation, the third obtaining module 802 is further configured to obtain the energy consumption value or the carbon emission amount of the target object based on the data volume of the target object.

In an optional implementation, the obtaining the energy consumption value or the carbon emission amount of the target object based on the data volume of the target object includes:

obtaining slice energy consumption information and a slice data volume of a slice in which the target object is located; and

obtaining the energy consumption value or the carbon emission amount of the target object based on the slice energy consumption information, the slice data volume, and the data volume of the target object.

The energy consumption information obtaining apparatus provided in this embodiment of this application is capable of implementing the processes implemented in the method embodiment of FIG. 3, and can achieve the same technical effect. To avoid repetition, details are not described herein again.

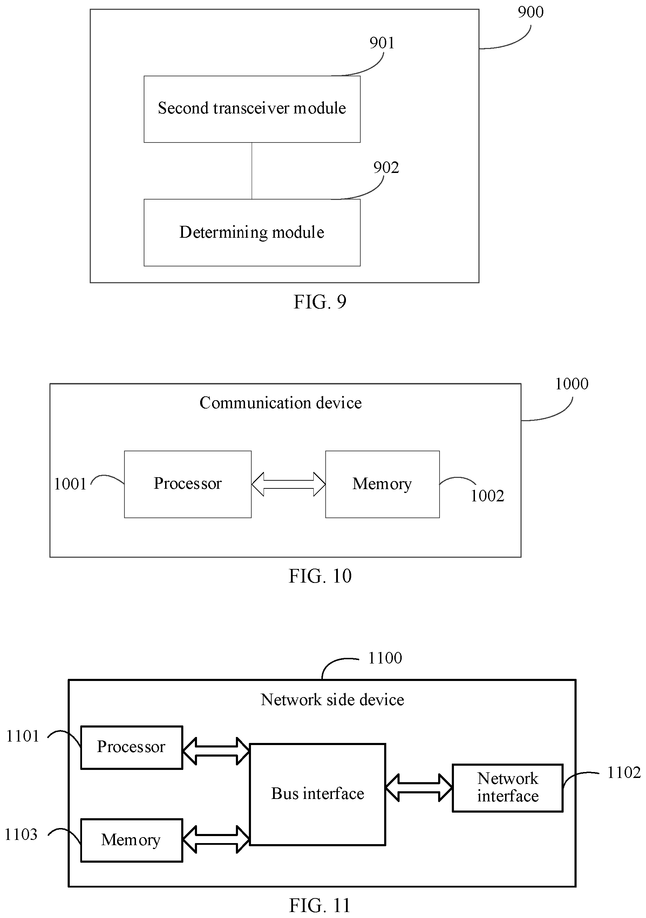

FIG. 9 is a schematic structural diagram of a data volume reporting apparatus according to an embodiment of this application. As shown in FIG. 9, the apparatus 900 mainly includes: a second transceiver module 901 and a determining module 902.

In this embodiment of this application, the second transceiver module 901 is configured to receive a second request message sent by a target network element, where the second request message is used for instructing an SMF to notify a UPF to which a target object belongs to report a data volume of the target object to the target network element based on a target granularity, and the target granularity includes one of the following: a PDU session or a QoS flow. The determining module 902 is configured to determine the UPF to which the target object belongs. The second transceiver module 901 is further configured to send a third request message to the UPF, where the third request message is used for notifying the UPF to report the data volume of the target object to the target network element based on the target granularity.

In an optional implementation, the second request message carries at least one of the following:

an event indication, where the event indication is used for indicating that the target object is a target QoS flow, or the event indication is used for indicating that the target object is a target PDU session;
an identifier of the target PDU session;
an identifier of a target UE;
an identifier of an application program;
S-NSSAI; and
a DNN.

In an optional implementation, the third request message carries at least one of the following:

indication information of a reporting type, where the reporting type includes one of the following: periodic reporting or one-time reporting; and
reporting period indication information.

The data volume reporting apparatus provided in this embodiment of this application is capable of implementing the processes implemented in the method embodiment of FIG. 4, and can achieve the same technical effect. To avoid repetition, details are not described herein again.

As shown in FIG. 10, an embodiment of this application further provides a communication device 1000, including a processor 1001 and a memory 1002. The memory 1002 stores a program or instructions executable on the processor 1001. For example, when the communication device 1000 is a terminal, the program or the instructions, when executed by the processor 1001, implement the steps of the foregoing energy consumption information obtaining method or the steps of the foregoing data volume reporting method, and can achieve the same technical effect. To avoid repetition, details are not described herein again.

An embodiment of this application further provides a network side device, including a processor and a communication interface. The communication interface is coupled to the processor, and the processor is configured to execute a program or instructions, to implement the steps of the method embodiment shown in FIG. 2, FIG. 3, or FIG. 4. The embodiment of the network side device corresponds to the foregoing method embodiment of the network side device. All implementation processes and implementations of the foregoing method embodiment may be suitable for the embodiment of the network side device, and can achieve the same technical effect.

Specifically, an embodiment of this application further provides a network side device. As shown in FIG. 11, the network side device 1100 includes a processor 1101, a network interface 1102, and a memory 1103. The network interface 1102 is, for example, a common public radio interface (common public radio interface, CPRI).

Specifically, the network side device 1100 in this embodiment of this application further includes: instructions or a program stored in the memory 1103 and executable on the processor 1101. The processor 1101 invokes the instructions or the program in the memory 1103 to perform the method performed by each module shown in FIG. 7 to FIG. 9, and can achieve the same technical effect. To avoid repetition, details are not described herein again.

An embodiment of this application further provides a readable storage medium. The readable storage medium stores a program or instructions. The program or the instructions, when executed by a processor, implement the steps of the foregoing energy consumption information obtaining method or the steps of the foregoing data volume reporting

method, and can achieve the same technical effect. To avoid repetition, details are not described herein again.

The processor is a processor described in the terminal in the foregoing embodiment. The readable storage medium includes a computer-readable storage medium, for example, a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to execute a program or instructions, to implement the steps of the foregoing energy consumption information obtaining method, or implement the steps of the foregoing data volume reporting method, and can achieve same technical effect. To avoid repetition, details are not described herein again.

It should be understood that, the chip mentioned in this embodiment of this application may be further referred to as a system-level chip, a system chip, a chip system, a system-on-chip, or the like.

An embodiment of this application further provides a computer program/program product. The computer program/program product is stored in a storage medium. The computer program/program product is executed by at least one processor to implement the steps in the embodiments of the foregoing energy consumption information obtaining method, or to implement the steps in the embodiments of the foregoing data volume reporting method, and can achieve same technical effect. To avoid repetition, details are not described herein again.

An embodiment of this application further provides an energy consumption information obtaining system, including: a first communication device, a second communication device, and a third communication device. The first communication device may be configured to perform the steps of the energy consumption information obtaining method 200 described above, the second communication device may be configured to perform the steps of the energy consumption information obtaining method 300 described above, and the third communication device may be configured to perform the steps of the data volume reporting method described above.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element defined by a statement "includes a..." does not exclude, without more limitations, existence of another same element in a process, method, product, or apparatus that includes the element. Furthermore, it is to be noted that the scope of the method and apparatus in the implementations of this application is not limited to performing the functions in the order shown or discussed, but may also include performing the functions in a substantially same manner or in a reverse order based on the functions involved. For example, the described method may be performed in an order different from the order described, and various steps can also be added, omitted, or combined. Additionally, features described in some examples may be combined in other examples.

According to the descriptions in the foregoing implementations, a person skilled in the art may clearly learn that the method according to the foregoing embodiments may be implemented by using a computer software product and a necessary universal hardware platform, or by using hardware. The computer software product is stored in a storage medium (such as a ROM, a RAM, a magnetic disk, or an optical disc), and includes several instructions for instructing a terminal or a network side device to perform the methods described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many implementations without departing from the idea of this application and the scope of protection of the claims. All of the implementations fall within the protection of this application.

## Claims

**1.** An energy consumption information obtaining method, comprising:

obtaining, by a target network element, an energy consumption exposure request sent by a requesting end, wherein the energy consumption exposure request is used for requesting exposure of energy consumption information of a target object based on a target granularity, and the target granularity comprises one of the following: a protocol data unit PDU session or a quality of service QoS flow; and

obtaining, by the target network element, the energy consumption information of the target object based on the target granularity, wherein the target object comprises one of the following: a target PDU session or a target QoS flow.

**2.** The method according to claim 1, wherein the energy consumption exposure request carries at least one of the

following: first information used for indicating a statistical target, second information used for indicating an energy consumption information obtaining manner, and third information used for indicating the target object, wherein the statistical target comprises at least one of the following: an energy consumption amount, a carbon emission amount, and a data volume.

**3.** The method according to claim 2, wherein the second information comprises at least one of the following:

indication information of an obtaining type, used for indicating an obtaining type of the energy consumption information, wherein the obtaining type comprises one of the following: periodic obtaining or one-time obtaining;
obtaining period indication information, used for indicating an obtaining period of the energy consumption information; and
indication information of the target granularity.

**4.** The method according to claim 2, wherein the third information comprises at least one of the following:

a data network name DNN, used for indicating obtaining of energy consumption information of a target object belonging to the DNN;
single network slice selection assistance information S-NSSAI, used for indicating obtaining of energy consumption information of a target object belonging to the S-NSSAI;
an identifier of the target PDU session; and
QoS filtering criteria.

**5.** The method according to claim 4, wherein the third information further comprises at least one of the following:

identification information of a user equipment UE, used for indicating obtaining of energy consumption information of a target object corresponding to the UE;
an identifier of an application function, used for indicating obtaining of energy consumption information of a target object belonging to the application function;
an identifier of an application program, used for indicating obtaining of energy consumption information of a target object corresponding to the application program; and
a session identifier of the application function, used for indicating obtaining of energy consumption information of a target object corresponding to the session identifier.

**6.** The method according to any one of claims 1 to 5, wherein after the obtaining, by the target network element, the energy consumption information of the target object based on the target granularity, the method further comprises: sending, by the target network element, the energy consumption information of the target object to the requesting end, wherein the energy consumption information of the target object comprises one of the following: a data volume of the target object, an energy consumption value of the target object, or a carbon emission amount of the target object.

**7.** The method according to claim 6, wherein in a case that the energy consumption information of the target object comprises the energy consumption value of the target object or the carbon emission amount of the target object, the obtaining, by the target network element, the energy consumption information of the target object based on the target granularity comprises:

obtaining, by the target network element, the data volume of the target object based on the target granularity; and
obtaining, by the target network element, the energy consumption information of the target object based on the data volume of the target object.

**8.** The method according to claim 7, wherein the obtaining, by the target network element, the energy consumption information of the target object based on the data volume of the target object comprises:

obtaining slice energy consumption information and a slice data volume of a slice in which the target object is located; and
obtaining the energy consumption information of the target object based on the slice energy consumption information, the slice data volume, and the data volume of the target object.

**9.** The method according to claim 7, wherein the obtaining, by the target network element, the data volume of the target object based on the target granularity comprises:

determining, by the target network element, a session management function SMF corresponding to the target object through a unified data management UDM entity; and
obtaining, by the target network element, the data volume of the target object through the SMF.

**10.** The method according to claim 9, wherein the determining, by the target network element, a session management function SMF corresponding to the target object through a unified data management UDM entity comprises:

sending, by the target network element, a first request message to the UDM, wherein the first request message is used for requesting the session management function SMF corresponding to the target object; and
receiving, by the target network element, a first response message sent by the UDM, wherein the first response message carries identification information of the SMF.

**11.** The method according to claim 10, wherein the first request message carries at least one of the following:

a DNN;
identification information of S-NSSAI;
an identifier of the target PDU session;
QoS filtering criteria; and
identification information of a UE.

**12.** The method according to claim 9, wherein the obtaining, by the target network element, the data volume of the target object through the SMF comprises:

sending, by the target network element, a second request message to the SMF, wherein the second request message is used for instructing the SMF to notify a user plane function UPF to which the target object belongs to report the data volume of the target object to the target network element based on the target granularity; and
receiving, by the target network element, the data volume of the target object that is reported by the UPF.

**13.** The method according to claim 12, wherein the second request message carries at least one of the following:

an event indication, wherein the event indication is used for indicating that the target object is the target QoS flow, or the event indication is used for indicating that the target object is the target PDU session;
an identifier of the target PDU session;
an identifier of a target UE;
an identifier of an application program;
S-NSSAI; and
a DNN.

**14.** The method according to any one of claims 9 to 13, wherein the target network element comprises an energy efficiency network function or a network data analytics function.

**15.** The method according to claim 7, wherein the target network element comprises an SMF; and the obtaining, by the target network element, the data volume of the target object based on the target granularity comprises:

notifying, by the SMF based on the energy consumption exposure request, a UPF to which the target object belongs to report the data volume of the target object based on the target granularity; and
receiving, by the SMF, the data volume of the target object that is reported by the UPF.

**16.** The method according to claim 15, wherein the notifying, by the SMF based on the energy consumption exposure request, a UPF to which the target object belongs to report the data volume of the target object based on the target granularity comprises:
sending, by the SMF, a notification message to the UPF, wherein the notification message is used for instructing the UPF to collect statistics on the data volume of the target object.

**17.** The method according to claim 16, wherein the notification message comprises at least one of the following:

indication information of a reporting type, wherein the reporting type comprises one of the following: periodic reporting or one-time reporting; and

reporting period indication information.

**18.** An energy consumption information obtaining method, comprising:

sending, by a requesting end, an energy consumption exposure request to a target network element, wherein the energy consumption exposure request is used for requesting exposure of energy consumption information of a target object based on a target granularity, and the target granularity comprises one of the following: a protocol data unit PDU session or a quality of service QoS flow; and
obtaining, by the requesting end, the energy consumption information of the target object that is sent by the target network element, wherein the target object comprises one of the following: a target PDU session or a target QoS flow.

**19.** The method according to claim 18, wherein the energy consumption exposure request carries at least one of the following: first information used for indicating a statistical target, second information used for indicating an energy consumption information obtaining manner, and third information used for indicating the target object, wherein the statistical target comprises at least one of the following: energy consumption, carbon emission, and a data volume.

**20.** The method according to claim 19, wherein the second information comprises at least one of the following:

indication information of an obtaining type, used for indicating an obtaining type of the energy consumption information, wherein the obtaining type comprises one of the following: periodic obtaining or one-time obtaining;
obtaining period indication information, used for indicating an obtaining period of the energy consumption information; and
indication information of the target granularity.

**21.** The method according to claim 19, wherein the third information comprises at least one of the following:

a data network name DNN, used for indicating obtaining of energy consumption information of a target object belonging to the DNN;
single network slice selection assistance information S-NSSAI, used for indicating obtaining of energy consumption information of a target object belonging to the S-NSSAI;
an identifier of the target PDU session; and
QoS filtering criteria.

**22.** The method according to claim 21, wherein the third information further comprises at least one of the following:

identification information of a UE, used for indicating obtaining of energy consumption information of a target object corresponding to the UE;
an identifier of an application function, used for indicating obtaining of energy consumption information of a target object belonging to the application function;
an identifier of an application program, used for indicating obtaining of energy consumption information of a target object corresponding to the application program; and
a session identifier of the application function, used for indicating obtaining of energy consumption information of a target object corresponding to the session identifier.

**23.** The method according to any one of claims 18 to 22, wherein the energy consumption information comprises at least one of the following: an energy consumption value, a carbon emission amount, and a data volume.

**24.** The method according to claim 23, wherein in a case that the energy consumption information comprises the data volume, after the obtaining, by the requesting end, the energy consumption information of the target object that is sent by the target network element, the method further comprises:
obtaining, by the requesting end, the energy consumption value or the carbon emission amount of the target object based on the data volume of the target object.

**25.** The method according to claim 24, wherein the obtaining, by the requesting end, the energy consumption value or the carbon emission amount of the target object based on the data volume of the target object comprises:

obtaining, by the requesting end, slice energy consumption information and a slice data volume of a slice in which

the target object is located; and
obtaining the energy consumption value or the carbon emission amount of the target object based on the slice energy consumption information, the slice data volume, and the data volume of the target object.

**26.** A data volume reporting method, comprising:

receiving, by an SMF, a second request message sent by a target network element, wherein the second request message is used for instructing the SMF to notify a UPF to which a target object belongs to report a data volume of the target object to the target network element based on a target granularity, and the target granularity comprises one of the following: a protocol data unit PDU session or a quality of service QoS flow;
determining, by the SMF, the UPF to which the target object belongs; and
sending, by the SMF, a third request message to the UPF, wherein the third request message is used for notifying the UPF to report the data volume of the target object to the target network element based on the target granularity.

**27.** The method according to claim 26, wherein the second request message carries at least one of the following:

an event indication, wherein the event indication is used for indicating that the target object is a target QoS flow, or the event indication is used for indicating that the target object is a target PDU session;
an identifier of the target PDU session;
an identifier of a target UE;
an identifier of an application program;
S-NSSAI; and
a DNN.

**28.** The method according to claim 26, wherein the third request message carries at least one of the following:

indication information of a reporting type, wherein the reporting type comprises one of the following: periodic reporting or one-time reporting; and
reporting period indication information.

**29.** An energy consumption information obtaining apparatus, comprising:

a first obtaining module, configured to obtain an energy consumption exposure request sent by a requesting end, wherein the energy consumption exposure request is used for requesting exposure of energy consumption information of a target object based on a target granularity, and the target granularity comprises one of the following: a protocol data unit PDU session or a quality of service QoS flow; and
a second obtaining module, configured to obtain the energy consumption information of the target object based on the target granularity, wherein the target object comprises one of the following: a target PDU session or a target QoS flow.

**30.** An energy consumption information obtaining apparatus, comprising:

a first transceiver module, configured to send an energy consumption exposure request to a target network element, wherein the energy consumption exposure request is used for requesting exposure of energy consumption information of a target object based on a target granularity, and the target granularity comprises one of the following: a PDU session or a QoS flow; and
a third obtaining module, configured to obtain the energy consumption information of the target object sent by the target network element, wherein the target object comprises one of the following: a target PDU session or a target QoS flow.

**31.** A data volume reporting apparatus, comprising:

a second transceiver module, configured to receive a second request message sent by a target network element, wherein the second request message is used for instructing an SMF to notify a UPF to which a target object belongs to report a data volume of the target object to the target network element based on a target granularity, and the target granularity comprises one of the following: a PDU session or a QoS flow; and
a determining module, configured to determine the UPF to which the target object belongs;
the second transceiver module being further configured to send a third request message to the UPF, wherein the

third request message is used for notifying the UPF to report the data volume of the target object to the target network element based on the target granularity.

**32.** A communication device, comprising a processor and a memory, the memory storing a program or instructions executable on the processor, and the program or the instructions, when executed by the processor, implementing the steps of the methods according to any one of claims 1 to 28.

**33.** A readable storage medium, storing a program or instructions, the program or the instructions, when executed by a processor, implementing the steps of the methods according to any one of claims 1 to 28.

**34.** A chip, comprising a processor and a communication interface, the communication interface being coupled to the processor, and the processor being configured to execute a program or instructions, to implement the steps of the methods according to any one of claims 1 to 28.

**35.** A computer program/program product, stored in a storage medium, the program/program product being executed by at least one processor to implement the steps of the methods according to any one of claims 1 to 28.

12
Core network device
Access network device
11
Terminal

FIG. 1

200

S210

A target network element obtains an energy consumption exposure request sent by a requesting end, where the energy consumption exposure request is used for requesting exposure of energy consumption information of a target object based on a target granularity, and the target granularity includes one of the following: a PDU session and a QoS flow

S212

The target network element obtains the energy consumption information of the target object based on the target granularity, where the target object includes one of the following: a target PDU session and a target QoS flow

FIG. 2

300
S310
A requesting end sends an energy consumption exposure request to a target network element, where the energy consumption exposure request is used for requesting exposure of energy consumption information of a target object based on a target granularity, and the target granularity includes one of the following: a protocol data unit PDU session and a quality of service QoS flow
S312
The requesting end obtains the energy consumption information of the target object that is sent by the target network element, where the target object includes one of the following: a target PDU session and a target QoS flow

FIG. 3

400
S410
An SMF receives a second request message sent by a target network element, where the second request message is used for instructing the SMF to notify a UPF to which a target object belongs to report a data volume of the target object to the target network element based on a target granularity, and the target granularity includes one of the following: a PDU session and a QoS flow
S412
The SMF determines the UPF to which the target object belongs
S414
The SMF sends a third request message to the UPF, where the third request message is used for notifying the UPF to report the data volume of the target object to the target network element based on the target granularity

FIG. 4

EE information requesting end
OA&M
EE EF/ NWDAF
UDM
SMF
UPF
S500: Obtain energy consumption data of a slice in which a current terminal is located
S501: Energy consumption exposure request
S502: First request message
S503: SMF information
S504: Second request message
S505: Third request message
S506: Response message
S507: Response message
S508: Monitored data volume at a corresponding granularity
S509: Generate energy consumption information
S510: Energy consumption information
EE information requesting end
OA&M
UDM
SMF
UPF
S600: Obtain energy consumption data of a slice in which a current terminal is located
S601: Determine monitored energy consumption information
S602: First request message
S603: SMF information
S604: Energy consumption exposure request
S605: Third request message
S606: Response message
S607: Monitored data volume
S608: Generate energy consumption information
S609: Response message
S610: Energy consumption information

FIG. 5

FIG. 6

700
701
First obtaining module
702
Second obtaining module

FIG. 7

800
801
First transceiver module
802
Third obtaining module

FIG. 8

900
901
Second transceiver module
902
Determining module

FIG. 9

1000
Communication device
1001
Processor
Memory
1002

FIG. 10

1100
Network side device
1101
Processor
Bus interface
Network interface
1102
1103
Memory

FIG. 11

## INTERNATIONAL SEARCH REPORT

International application No. **PCT/CN2024/123456**

**A. CLASSIFICATION OF SUBJECT MATTER**

H04W52/26(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, ENTXTC: 获取, 监控, 查询, 分析, 统计, 功耗, 功率, 能耗, 耗能, 会话, 数据量, QoS流, 每, analysis, monitor, energy, power, PDU, session, data volume, QoS flow, per

**C. DOCUMENTS CONSIDERED TO BE RELEVANT**

| Category* | Citation of document, with indication, where appropriate, of the relevant passages | Relevant to claim No. |
|---|---|---|
| X | WO 2023179890 A1 (LENOVO (SINGAPORE) PTE. LTD.) 28 September 2023 (2023-09-28) description, paragraphs [0064]-[0166] | 1-35 |
| PX | US 2024049006 A1 (SAMSUNG ELECTRONICS CO., LTD.) 08 February 2024 (2024-02-08) description, paragraphs [0025]-[0043] | 1-35 |
| A | US 2020229085 A1 (MEDIATEK INC.) 16 July 2020 (2020-07-16) entire document | 1-35 |
| A | EP 4156737 A1 (NOKIA TECHNOLOGIES OY) 29 March 2023 (2023-03-29) entire document | 1-35 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 December 2024** | **02 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/123456**

| Patent document cited in search report | | | Publication date (day/month/year) | Patent family member(s) | | | Publication date (day/month/year) |
|---|---|---|---|---|---|---|---|
| WO | 2023179890 | A1 | 28 September 2023 | None | | | |
| US | 2024049006 | A1 | 08 February 2024 | WO | 2024029855 | A1 | 08 February 2024 |
| | | | | KR | 20240019154 | A | 14 February 2024 |
| | | | | EP | 4356639 | A1 | 24 April 2024 |
| | | | | EP | 4356639 | A4 | 09 October 2024 |
| | | | | GB | 2622353 | A | 20 March 2024 |
| | | | | GB | 2622353 | A8 | 27 March 2024 |
| | | | | CN | 118140512 | A | 04 June 2024 |
| US | 2020229085 | A1 | 16 July 2020 | US | 11160019 | B2 | 26 October 2021 |
| | | | | WO | 2020143769 | A1 | 16 July 2020 |
| | | | | TW | 202038645 | A | 16 October 2020 |
| | | | | TWI | 735136 | B | 01 August 2021 |
| | | | | CN | 111699705 | A | 22 September 2020 |
| | | | | CN | 111699705 | B | 05 May 2023 |
| EP | 4156737 | A1 | 29 March 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202311319700